# EUROPÄISCHE PATENTANMELDUNG

(11) **EP 4 807 184 A1**
(43) Veröffentlichungstag der Anmeldung: **16.09.2026**
(21) Anmeldenummer: 26163730.0
(22) Anmeldetag: 10.03.2026
(51) Int. Cl.: F04D 15/00, G05B 21/02, G05B 23/02

(54) **SENSORVORRICHTUNG ZUM ÜBERWACHEN EINER KREISELPUMPE**

(30) Priorität: 12.03.2025 BE 202505154
(71) Anmelder: WILO SE, 44263 Dortmund (DE)
(72) Erfinder: Hubo-Kleiss, Michael, 44263 Dortmund (DE); Kaliwoda, Michael, 44263 Dortmund (DE); May, André, 44263 Dortmund (DE)
(74) Vertreter: Michalski Hüttermann & Partner mbB

(57) **Zusammenfassung**

Gegenstand der Erfindung ist eine Sensorvorrichtung (7) zum Überwachen einer Kreiselpumpe (1), mit wenigstens einem Signaleingang (9) umfassend einen Stromwandlereingang, einen Analogeingang und/oder einen Digitaleingang, einer Low Power Wide Area Network, LPWAN,-Funkschnittstelle (13) und einer prozessorbasierten Datenverarbeitungseinrichtung (12), wobei die Datenverarbeitungseinrichtung (12) eingerichtet ist, wenigstens jede Sekunde mittels des wenigstens einen Signaleingangs (8) wenigstens ein einen Zustand der Kreiselpumpe (1) charakterisierendes Überwachungssignal zu erfassen, eine analysierende und datenreduzierende Vorverarbeitung des wenigstens einen Überwachungssignals hinsichtlich eines Alarmzustands der Kreiselpumpe (1), einer statistischen Auswertung des Zustands der Kreiselpumpe (1) und/oder einer Zustandsüberwachung und -vorhersage der Kreiselpumpe (1) vorzunehmen, und das wenigstens eine vorverarbeitete Überwachungssignal nicht öfters als alle 5 Minuten mittels der LPWAN-Funkschnittstelle (13) an eine Cloud-Infrastruktur (14) eingerichtet zum Nachverarbeiten des wenigstens einen übertragenen, vorverarbeiteten Überwachungssignal zu übertragen.

## Beschreibung

### Technisches Gebiet

Die Erfindung betrifft eine Sensorvorrichtung zum Überwachen einer Kreiselpumpe, mit wenigstens einem Signaleingang, einer Low Power Wide Area Network, LPWAN,-Funkschnittstelle und einer prozessorbasierten Datenverarbeitungseinrichtung. Die Erfindung betrifft ferner ein Verfahren zum Überwachen einer Kreiselpumpe mittels einer Sensorvorrichtung, mit dem Schritt: Erfassen wenigstens eines einen Zustand der Kreiselpumpe charakterisierenden Überwachungssignals an wenigstens einem Signaleingang der Sensorvorrichtung.

Diese innovative Technologie trägt insbesondere zur Erreichung der Sustainable Development Goals der Vereinten Nationen (SDGs) 9, 11 und 13 bei, indem sie die Effizienz und Lebensdauer der Infrastruktur erhöht (SDG 9), eine zuverlässige Wasserversorgung in städtischen und ländlichen Gebieten sicherstellt (SDG 11) und den Energieverbrauch sowie die Treibhausgasemissionen durch optimierten Pumpenbetrieb und energieeffiziente Datenübertragung reduziert (SDG 13).

### Hintergrund der Erfindung

Kreiselpumpen sind in einer Vielzahl industrieller und gewerblicher Anwendungen verbreitet, insbesondere in der Wasser- und Abwasseraufbereitung, der chemischen Industrie sowie in Heizungs- und Kühlkreisläufen. Funktionsfähigkeit und Effizienz von Kreiselpumpen hängen maßgeblich von ihrem Betriebszustand ab, sodass eine kontinuierliche oder regelmäßige Überwachung ihrer Betriebsparameter notwendig ist, um Ausfälle oder Fehlfunktionen frühzeitig zu erkennen.

Herkömmliche Überwachungssysteme für Kreiselpumpen basieren häufig auf kabelgebundenen Sensorlösungen, die in eine zentrale Steuerungseinheit integriert sind. Diese Überwachungssysteme ermöglichen eine detaillierte Erfassung von Betriebsparametern, erfordern jedoch eine umfangreiche Verkabelung, eine dauerhafte Stromversorgung und eine aufwendige Datenverarbeitung. Zudem erzeugen solche Überwachungssysteme oft große Datenmengen, deren Übertragung und Analyse erhebliche Ressourcen und Speicherplatz beansprucht.

In jüngerer Zeit wurden drahtlose Überwachungslösungen entwickelt, die eine flexiblere Installation und eine verbesserte Skalierbarkeit bieten. Insbesondere mobilfunkbasierte Technologien ermöglichen eine Datenübertragung über große Entfernungen. Allerdings stellen diese Technologien spezifische Herausforderungen dar, um mit minimalem Energieaufwand zu senden. Ein Problem herkömmlicher Lösungen ist eine hohe Frequenz an Messwertübertragungen, die zu dem unnötigem Energieverbrauch und hoher Netzwerkauslastung führt.

### Beschreibung der Erfindung

Ausgehend von dieser Situation ist es eine vorliegende Aufgabe, eine Sensorvorrichtung zum Überwachen einer Kreiselpumpe und ein entsprechendes Verfahren vorzuschlagen, die eine energieeffiziente und drahtlose Datenübertragung bei flexibler und sogar nachträglicher Installation ermöglicht.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch eine Sensorvorrichtung zum Überwachen einer Kreiselpumpe, mit
wenigstens einem Signaleingang umfassend einen Stromwandlereingang, einen Analogeingang und/oder einen Digitaleingang, einer Low Power Wide Area Network, LPWAN,-Funkschnittstelle und einer prozessorbasierten Datenverarbeitungseinrichtung, wobei
die Datenverarbeitungseinrichtung eingerichtet ist,
   wenigstens jede Sekunde mittels des wenigstens einen Signaleingangs wenigstens ein einen Zustand der Kreiselpumpe charakterisierendes Überwachungssignal zu erfassen,
   eine analysierende und/oder datenreduzierende Vorverarbeitung des wenigstens einen Überwachungssignals insbesondere hinsichtlich eines Alarmzustands der Kreiselpumpe, einer statistischen Auswertung des Zustands der Kreiselpumpe und/oder einer Zustandsüberwachung und -vorhersage der Kreiselpumpe vorzunehmen, und
   das wenigstens eine vorverarbeitete Überwachungssignal nicht öfters als alle 5 Minuten mittels der LPWAN-Funkschnittstelle an eine Cloud-Infrastruktur eingerichtet zum Nachverarbeiten des wenigstens einen übertragenen, vorverarbeiteten Überwachungssignal zu übertragen.

In anderen Worten handelt es sich um eine Sensorvorrichtung zum Überwachen einer Kreiselpumpe, die insbesondere mit einer Vielzahl von Signaleingängen ausgestattet ist, darunter mindestens ein Stromwandlereingang, ein Analogeingang oder ein Digitaleingang. Die Sensorvorrichtung umfasst zudem eine LPWAN-Funkschnittstelle, die eine energieeffiziente und drahtlose Übertragung von Daten ermöglicht. Die prozessorbasierte Datenverarbeitungseinrichtung der Sensorvorrichtung ist so konfiguriert, dass sie in kurzen Zeitintervallen, mindestens einmal pro Sekunde, wenigstens ein Überwachungssignal, bevorzugt Überwachungssignale, von dem wenigstens einen Signaleingang aufnimmt und verarbeitet. Die erfassten Überwachungssignale werden insbesondere einer datenreduzierenden Vorverarbeitung unterzogen. Die Vorverarbeitung umfasst zudem die Analyse der Überwachungssignale hinsichtlich eines möglichen Alarmzustands der Kreiselpumpe, eine statistische Auswertung hinsichtlich eines Pumpenzustands und/oder eine kontinuierliche Zustandsüberwachung und -vorhersage. Nach der Vorverarbeitung werden die Überwachungssignale in definierten Intervallen, die nicht kürzer als 5 Minuten sind, über die LPWAN-Funkschnittstelle an eine Cloud-Infrastruktur gesendet. Die Cloud-Infrastruktur ist insbesondere dazu ausgelegt, die übertragenen, vorverarbeiteten Überwachungssignale nachzubearbeiten, beispielsweise weiter zu analysieren und gegebenenfalls weitere Maßnahmen einzuleiten.

Die Sensorvorrichtung zur Überwachung einer Kreiselpumpe umfasst den wenigstens einen Signaleingang, der als Stromwandlereingang, Analogeingang und/oder Digitaleingang ausgestaltet sein kann, sodass durch die Sensorvorrichtung verschiedene Arten von Überwachungssignalen erfasst werden können, beispielsweise elektrische Stromwerte zur Leistungsüberwachung, analoge Vibrationssignale zur Detektion mechanischer Unregelmäßigkeiten oder digitale Signale der Kreiselpumpe. Der Stromwandlereingang ist bevorzugt zum Anschließen eines Stromwandlers, auch Stromsensor oder Strommesswandler genannt, vorgesehen, um elektrische Ströme zu messen und für eine weitere Verarbeitung aufzubereiten. Der Stromwandler wandelt hohe elektrische Ströme, die beispielsweise durch ein Netzanschlusskabel der Kreiselpumpe fließen, in kleinere, proportionale Ströme oder Spannungen um, die dann von dem wenigsten einen Signaleingang der Sensorvorrichtung sicher und genau erfasst werden können.

Ein Beispiel für das wenigstens einen Zustand der Kreiselpumpe charakterisierendes Überwachungssignal ist eine Überwachung eines Motorstroms der Kreiselpumpe. Wenn ein Elektromotor der Kreiselpumpe mehr Strom als in einem regulären Betrieb zieht, kann dies auf mechanische Probleme wie eine blockierte Welle, Verschleiß oder ein defektes Lager hinweisen. Um diesen Motorstrom zuverlässig zu messen, wird der Stromwandler um eine der stromführenden Leitungen des Netzanschlusskabels gelegt. Der Stromwandler erzeugt ein schwächeres Signal, das über den Stromwandlereingang in die Sensorvorrichtung eingespeist und dort analysiert wird. Ein weiterer möglicher Anwendungsfall ist eine Lastüberwachung in industriellen Pumpensystemen, bei denen ein Stromverbrauch als Indikator für einen Gesamtwirkungsgrad des Pumpensystems dient. Durch eine insbesondere kontinuierliche Erfassung und Analyse des Stromverbrauchs kann die Sensorvorrichtung Abweichungen frühzeitig erkennen und helfen, eine Energieeffizienz des Pumpensystems zu verbessern und Wartungskosten zu reduzieren. Der Vorteil des Stromwandlereingangs bzw. des Stromwandlers besteht darin, dass eine berührungslose Messung möglich ist.

Die LPWAN-Funkschnittstelle ermöglicht eine energieeffiziente drahtlose Datenübertragung über Protokolle wie beispielsweise LoRaWAN, LTE-M oder NB-IoT, wodurch die Sensorvorrichtung besonders für einen auch nachträglichen Einsatz in abgelegenen oder schwer zugänglichen Bereichen geeignet ist. Das wenigstens eine Überwachungssignal beschreibt einen Zustand der Kreiselpumpe, beispielsweise eine Stromaufnahme zur Identifikation von Laständerungen oder Frequenzspektren zur Erkennung von Kavitationseffekten. Das wenigstens eine Überwachungssignal wird der analysierenden und/oder datenreduzierenden Vorverarbeitung unterzogen, die beispielsweise eine Fehlersignalerkennung durch Musterabgleich, eine statistische Langzeitauswertung von Betriebstrends oder eine vorausschauende Wartungsprognose umfassen kann, indem Abweichungen von normalen Betriebswerten erkannt werden.

Der Begriff analysierende Vorverarbeitung bedeutet insbesondere, dass die Sensorvorrichtung die eingehenden Überwachungssignale untersucht, um aussagekräftige Merkmale zu identifizieren. Beispielsweise kann die Sensorvorrichtung Muster im Stromverbrauch, Vibrationsmuster oder Temperaturveränderungen erkennen, die auf einen sich abzeichnenden Fehler wie eine Unwucht, Kavitation oder ein blockierendes Lager hinweisen. Diese Analyse kann auf verschiedenen Methoden basieren, beispielsweise Frequenzanalysen, insbesondere Fast Fourier Transformation, Statistiken, beispielsweise Mittelwert oder Standardabweichung, oder Schwellenwertprüfungen, beispielsweise Erkennen eines kritischen Stromanstiegs.

Der Begriff datenreduzierende Vorverarbeitung bedeutet insbesondere, dass die erfassten und analysierten Überwachungssignale so weit komprimiert werden, dass die Überwachungssignale mit minimalem Speicher- und Energieaufwand verarbeitet und übertragen werden können, ohne dabei relevante Informationen zu verlieren. Beispielsweise kann die Sensorvorrichtung anstelle eines kontinuierlichen Stromsignals mit einer hohen Abtastrate nur statistische Kenngrößen, beispielsweise Durchschnittsstrom pro Minute, abgeänderte Wellenformen, beispielsweise reduzierte Frequenzauflösung, oder binäre Zustände, beispielsweise "Normalbetrieb" oder "Fehler", weitergeben. Ein Beispiel ist eine Überwachung des Elektromotors der Kreiselpumpe, bei dem anstelle eines Übersendens eine gesamten Stromverlaufs in Echtzeit an die Cloud nur gemeldet wird, ob die Stromaufnahme innerhalb eines normalen Bereichs liegt oder ob ein signifikanter Anstieg festgestellt wurde.

Durch diese analysierende und/oder datenreduzierende Vorverarbeitung wird eine Netzwerklast minimiert, eine Batterielaufzeit von drahtlosen Sensoren zum Erfassen des wenigstens einen Überwachungssignals verlängert und die Effizienz der nachgelagerten Datenanalyse in der Cloud verbessert.

Die vorverarbeiteten Überwachungssignale werden nicht häufiger als alle 5 Minuten über die LPWAN-Schnittstelle an die Cloud-Infrastruktur gesendet, die insbesondere für eine weitere Analyse, Langzeitspeicherung und mögliche Steuerungsmaßnahmen ausgelegt ist. Die prozessorbasierte Datenverarbeitungseinrichtung ist insbesondere ein zentrales Rechenmodul der Sensorvorrichtung, das für die Erfassung, datenreduzierende Analyse insbesondere zur Reduzierung einer nachfolgend übermittelnden Datenmenge und Übertragung der Überwachungssignale als reduzierte Datenmenge verantwortlich ist. Die prozessorbasierte Datenverarbeitungseinrichtung besteht typischerweise aus einem Mikrocontroller, MCU, oder Mikroprozessor, der speziell darauf ausgelegt ist, die Überwachungssignale insbesondere in Echtzeit zu verarbeiten, relevante Informationen mittels Vorverarbeitung herauszufiltern und nur wesentliche Informationen zu übertragen.

Die Cloud-Infrastruktur bezeichnet insbesondere eine vernetzte, skalierbare IT-Plattform, die Rechenleistung, Speicher und/oder Softwaredienste bereitstellt und über das Internet oder private Netzwerke zugänglich ist. In der hier beschriebenen Sensorvorrichtung dient die Cloud-Infrastruktur insbesondere als zentrale Datenverarbeitungs- und Analyseplattform, die empfangene Überwachungssignale weiterverarbeitet, langfristig speichert und/oder intelligente Diagnosen ermöglicht. Durch die Cloud-Infrastruktur können zum Nachverarbeiten leistungsstarke Datenanalyse-Algorithmen beispielsweise Trends auswerten, historische Vergleiche durchführen und/oder kritische Anomalien erkennen, beispielsweise ein sich anbahnender Lagerschaden durch zunehmende Unregelmäßigkeiten im Stromverbrauch. Das Nachverarbeiten kann ebenso bzw. gegenüber dem Vorverarbeiten bevorzugt die statistische Langzeitauswertung von Betriebstrends oder die vorausschauende Wartungsprognose umfassen. Falls eine solche Anomalie erkannt wird, kann die Cloud ein automatisiertes Wartungssignal an Instandhaltungspersonal senden und/oder eine proaktive Wartungsplanung erstellen.

Ferner kann die Cloud-Infrastruktur übertragene, vorverarbeitete Überwachungssignale von hunderten von Sensorvorrichtung gleichzeitig speichern und vergleichen, um systemweite Muster oder Fehlermuster über mehrere Standorte hinweg zu identifizieren. Die Cloud-Infrastruktur kann aus öffentlichen, privaten oder hybriden Cloud-Systemen bestehen. Vorteile der Cloud-Infrastruktur sind hohe Rechenleistung, Skalierbarkeit, automatische Software-Updates, Zugriff von überall und/oder die Möglichkeit, durch künstliche Intelligenz, KI, und maschinelles Lernen präzisere Fehlerdiagnosen und Wartungsstrategien für Kreiselpumpen zu entwickeln. Gleichzeitig reduziert die Cloud die lokalen Hardware-Anforderungen der Sensorvorrichtung, da eine aufwendige Datenverarbeitung und Langzeitspeicherung in die Cloud ausgelagert wird.

Gemäß einer bevorzugten Weiterbildung umfasst die Sensorvorrichtung zwei oder drei Stromwandlereingänge, wenigstens einen Analogausgang, wenigstens einen Digitalausgang und/oder eine RS485 Schnittstelle. Der Analogeingang ist bevorzugt für einen Eingangsstrom von 4 bis 20 mA und/oder eine Eingangsspannung von 0 bis 10 V ausgestaltet. Die RS485 Schnittstelle, auch als EIA-485oder als RS-485 bezeichnet, ist ein Industriestandard für eine physische Schnittstelle für die asynchrone serielle Datenübertragung. Bevorzugt ist die RS485 Schnittstelle gemäß TIA-485-A Standard, insbesondere gemäß ANSI/TIA/EIA-485-A-98 (R2003) gestaltet. Weiter bevorzugt weist die Sensorvorrichtung eine USB-C Schnittstelle insbesondere zum Programmieren derselben auf, wobei die USB-C Schnittstelle bevorzugt gemäß IEC 62680-1-3 Juli 2016 gestaltet ist. Durch eine solche Weiterbildung wird eine vielseitige Integration der Sensorvorrichtung in unterschiedliche Anwendungsgebiete und/oder Überwachungs- und Steuerungssysteme ermöglicht.

Nach einer anderen bevorzugten Ausgestaltung umfasst die analysierende und/oder datenreduzierende Vorverarbeitung eine Datenkompression und/oder Selektion des wenigstens einen Überwachungssignals. Eine Datenkompression kann beispielsweise durch verlustfreie Methoden wie Delta-Kodierung erfolgen, bei der nur Änderungen zwischen aufeinanderfolgenden Überwachungssignalen gespeichert werden, oder durch Lauflängencodierung, bei der lange Abschnitte gleicher Überwachungssignale komprimiert werden. Alternativ kann eine verlustbehaftete Kompression genutzt werden, etwa durch Fast-Fourier-Transformation, FFT, zur Umwandlung zeitbasierter Überwachungssignals in ein Frequenzspektrum, wobei nur relevanten Frequenzkomponente gespeichert und übertragen werden.

Die Selektion der Überwachungssignale kann beispielsweise durch ein Schwellwertverfahren realisiert werden, bei dem nur Überwachungssignals über oder unter einer definierten Grenze weiterverarbeitet werden, oder durch eine ereignisbasierte Selektion, bei der die Sensorvorrichtung nur dann Überwachungssignale überträgt, wenn ein ungewöhnliches Verhalten der Kreiselpumpe detektiert wird, beispielsweise plötzliche Vibrationen oder Leistungsschwankungen. Zudem kann eine adaptive Selektion eingesetzt werden, bei der eine Erfassungsrate je nach Betriebszustand der Kreiselpumpe variiert, beispielsweise eine höhere Aufzeichnungsfrequenz bei auffälligen Veränderungen und eine reduzierte Frequenz im Normalbetrieb. Diese Verfahren tragen dazu bei, die Energieeffizienz der Sensorvorrichtung zu erhöhen, Speicherplatz zu sparen und die drahtlose Kommunikation zu optimieren, insbesondere eine Datenmenge zu reduzieren und eine Effizienz der Übertragung über die LPWAN-Funkschnittstelle zu verbessern.

Gemäß einer weiteren bevorzugten Ausgestaltung umfasst die analysierende und/oder datenreduzierende Vorverarbeitung eine Amplituden- und/oder Zeitreduzierung des wenigstens einen Überwachungssignals. Eine Amplitudenreduzierung kann durch Quantisierung erfolgen, bei der kontinuierliche Überwachungssignale auf eine begrenzte Anzahl von Stufen abgebildet werden, sodass feinere Überwachungssignalvariationen vernachlässigt werden, oder durch Glättungsverfahren wie Moving-Average-Filter, die kleine Schwankungen eliminieren und nur relevante Überwachungssignale beibehalten. Alternativ kann eine Amplitude-Clipping-Methode eingesetzt werden, bei der nur Überwachungssignale oberhalb oder unterhalb bestimmter Grenzwerte gespeichert werden, um nur signifikante Änderungen eines Pumpenzustands zu erfassen.

Eine Zeitreduzierung kann durch Downsampling erreicht werden, bei dem Überwachungssignale nur in größeren Zeitintervallen erfasst werden, beispielsweise von 1 ms auf 100 ms, wodurch weniger Daten generiert und verarbeitet werden müssen. Eine weitere Möglichkeit ist eine ereignisgesteuerte Abtastung, bei der nur dann Überwachungssignale aufgenommen bzw. verarbeitet werden, wenn eine bestimmte Änderung im Signalverlauf detektiert wird, beispielsweise eine plötzliche Druck- oder Vibrationsabweichung der Kreiselpumpe. Diese Ausgestaltungen reduzieren eine Datenlast erheblich, verlängern eine Batterielaufzeit einer batteriebetriebenen Sensorvorrichtung und optimieren eine Nutzung einer verfügbaren Bandbreite für die drahtlose Übertragung über die LPWAN-Funkschnittstelle, zwecks Steigerung einer Effizienz der Verarbeitung und Übertragung.

Nach einer anderen bevorzugten Ausgestaltung ist eine Datenübertragungsrate des wenigstens einen Überwachungssignals ≥ 300, 500, 1000 oder 2000 größer als des wenigstens einen übertragenen, vorverarbeiteten Überwachungssignals ist. Durch diese Ausgestaltung lässt sich eine erhebliche Datenreduktion erreichen. Von der Sensorvorrichtung kann eine große Menge an Rohdaten als Überwachungssignale erfasst, analysiert und verdichtet werden, bevor nur eine stark reduzierte Datenmenge als vorverarbeiteten Überwachungssignale zur Cloud-Infrastruktur übertragen wird. Ein Beispiel ist die Überwachung der Stromaufnahme der Kreiselpumpe, bei der das Überwachungssignal als Rohsignal mit einer Abtastrate von 10 kHz erfasst wird, während nach der Vorverarbeitung lediglich ein komprimierter Statuswert oder eine statistische Kenngröße, wie der Durchschnitts- oder Spitzenwert pro Minute, als vorverarbeitetes Überwachungssignal übertragen wird.

Ebenso kann als weiteres Beispiel ein Vibrationssensor kontinuierlich mit 1 kHz messen, wobei nur bei Erreichen kritischer Schwellenwerte oder bei Anomalien eine zusammengefasste Information als vorverarbeitetes Überwachungssignal gesendet wird. Ein weiteres Beispiel ist eine Fourier-Analyse eines Pumpengeräuschs, bei der aus Millionen von Rohdatenpunkten als Überwachungssignale nur auffällige Frequenzänderungen extrahiert und als vorverarbeitetes Überwachungssignal übertragen werden. Durch eine solche Weiterbildung wird die Effizienz der drahtlosen Übertragung über LPWAN verbessert und gleichzeitig sichergestellt, dass nur relevante Informationen für die Überwachung der Kreiselpumpe erhalten bleiben. Konkret erlaubt die Weiterbildung eine signifikante Datenreduktion vor der Übertragung und Schonung von Bandbreite und Energieverbrauch bei.

Gemäß einer weiteren bevorzugten Ausgestaltung ist das wenigstens eine übertragene, vorverarbeitete Überwachungssignal vom Datentyp Boolean. Nach dieser Weiterbildung kann nimmt das wenigstens eine Überwachungssignal nach der Vorverarbeitung nur zwei mögliche Zustände an, beispielsweise 0 oder 1, true oder false bzw. ein oder aus. Diese Ausgestaltung ermöglicht eine maximale Datenreduktion, da anstelle komplexer Rohdaten als Überwachungssignale nur ein binärer Wert gesendet wird, was eine Übertragungsdauer und den Energieverbrauch erheblich senkt. Ein konkretes Beispiel ist eine Erkennung eines Alarmzustands der Kreiselpumpe, bei der die Sensorvorrichtung kontinuierlich Schwingungen, Stromaufnahme oder Temperatur messen kann und diese Überwachungssignale verarbeitet. Statt die Überwachungssignale mit hoher Auflösung zu senden, wird nur ein Boolean-Wert übertragen, der angibt, ob eine kritische Schwelle überschritten wurde, beispielsweise 1 gleich Alarm oder 0 gleich kein Alarm. Ein weiteres Beispiel ist die Zustandsüberwachung basierend auf einer Musterauswertung, bei der ein internes Modell der Sensorvorrichtung analysiert, ob die Kreiselpumpe in einem normalen bzw. regulären oder fehlerhaften Betriebsmodus arbeitet, und als Ergebnis lediglich ein Boolean-Signal sendet, beispielsweise "Pumpe läuft einwandfrei" gleich 0 oder "Wartung erforderlich" = 1. Diese Weiterbildung eignet sich besonders für energieeffiziente LPWAN-Netzwerke, da die Datenlast auf ein Minimum reduziert wird, während dennoch entscheidungsrelevante Informationen zuverlässig übertragen werden. Mit anderen Worten reduziert eine solche binäre Repräsentation der Überwachungssignale eine Komplexität der übertragenen Daten erheblich.

Nach einer anderen bevorzugten Ausgestaltung ist die LPWAN,-Funkschnittstelle eingerichtet, das wenigstens eine vorverarbeitete Überwachungssignal mittels eines Long Range Wide Area Network, LoRaWAN,-Netzprotokolls, eines Long Term Evolution for Machines, LTE-M,- Netzprotokolls und/oder mittels eines NarrowBand IoT-Netzprotokolls zu übertragen. LoRaWAN ist ein speziell für das Internet der Dinge, IoT, entwickeltes Funkprotokoll, das in lizenzfreien Frequenzbändern arbeitet und für große Reichweiten bei geringem Energieverbrauch optimiert ist, wodurch Sensoren Überwachungssignale über mehrere Kilometer an Gateways, die Cloud-Infrastruktur oder dergleichen senden können, beispielsweise zur Überwachung von Kreiselpumpen in abgelegenen Industrieanlagen ohne kabelgebundene Infrastruktur.

LTE-M basiert auf dem Mobilfunkstandard LTE und bietet eine höhere Bandbreite sowie niedrigere Latenzen als LoRaWAN, was sich für Anwendungen eignet, die eine zeitnähere Datenübertragung benötigen, wie etwa die Überwachung von Pumpenvibrationen in Echtzeit innerhalb eines städtischen Wasserwerks. NarrowBand IoT, NB-IoT, hingegen ist eine schmalbandige Mobilfunktechnologie, die besonders tief in Gebäude oder Untergrundbereiche vordringen kann, wodurch auch Kreiselpumpen in Kellerräumen oder Schächten zuverlässig überwacht werden können. NB-IoT erlaubt zudem eine hohe Skalierbarkeit mit vielen vernetzten Datenverarbeitungseinrichtungen innerhalb eines Netzes. Durch Unterstützung dieser verschiedenen LPWAN-Protokolle kann die Sensorvorrichtung flexibel an unterschiedliche Anwendungsfälle angepasst werden, indem je nach Infrastruktur und Anforderungen eine jeweils passende Übertragungstechnologie gewählt wird.

Gemäß einer weiteren bevorzugten Ausgestaltung erfolgt das Übertragen kontinuierlich und/oder periodisch und/oder nicht öfters als alle 10, 15, 20, 30 oder 60 Minuten. Durch eine solche Weiterbildung wird eine flexible Anpassung an verschiedene Überwachungsanforderungen ermöglicht. Eine kontinuierliche Übertragung bedeutet insbesondere, dass die Sensorvorrichtung das vorverarbeitete Überwachungssignal in Echtzeit oder mit minimaler Verzögerung sendet, was insbesondere bei sicherheitskritischen Anwendungen von Vorteil ist, beispielsweise wenn ein plötzlicher Anstieg einer Stromaufnahme der Kreiselpumpe auf eine drohende Blockade hinweist und sofort eine Warnung ausgegeben werden muss.

Eine periodische Übertragung hingegen erfolgt insbesondere in festen Zeitabständen, etwa alle 30 Minuten oder jede Stunde, was für Anwendungen sinnvoll ist, bei denen keine sofortige Reaktion erforderlich ist, wie etwa eine Langzeitanalyse von Verschleißerscheinungen oder Effizienztrends der Kreiselpumpe. Eine Begrenzung einer Übertragungsrate auf bestimmte Mindestintervalle wie 10, 15 oder 60 Minuten trägt dazu bei, den Energieverbrauch der Sensorvorrichtung und eine Netzwerklast zu minimieren, insbesondere bei batteriebetriebenen Sensorvorrichtungen, die in schwer zugänglichen Bereichen eingesetzt werden. Beispielsweise kann die Sensorvorrichtung in einer abgelegenen Wasseraufbereitungsanlage eine Betriebsparameter der Kreiselpumpe nur alle 20 Minuten senden, um Energie zu sparen, während eine industrielle Hochleistungskreiselpumpe in einer Fabrik kontinuierlich oder alle 10 Minuten überwacht wird, um frühzeitig auf Abweichungen reagieren zu können.

Nach einer anderen bevorzugten Ausgestaltung erfolgt das Erfassen kontinuierlich und/oder periodisch und/oder wenigstens alle 500, 250, 100, 50, 25, 5 oder 1 ms. Eine kontinuierliche Erfassung bedeutet insbesondere, dass das Überwachungssignal ohne Unterbrechung in Echtzeit aufgenommen wird, was besonders bei hochdynamischen Prozessen wichtig ist, beispielsweise wenn die Kreiselpumpe starke Lastschwankungen aufweist und plötzliche Änderungen des Stromverbrauchs oder von Vibrationen erkannt werden müssen. Eine periodische Erfassung hingegen erfolgt insbesondere in regelmäßigen Abständen, etwa alle 100 oder 500 Millisekunden, was ausreichend sein kann, wenn nur langfristige Trends oder mittelfristige Veränderungen, wie ein allmählicher Anstieg der Stromaufnahme aufgrund von Verschleiß, überwacht werden sollen. Eine Wahl einer höheren Abtastrate, beispielsweise 1 ms, ist besonders relevant für Anwendungen, bei denen schnelle Ereignisse wie Druckstöße oder Kavitationseffekte erfasst werden müssen, um die Kreiselpumpensteuerung darauf abzustimmen. Eine niedrigere Abtastrate von 500 ms oder mehr ist hingegen sinnvoll, wenn lediglich langsam variierende Betriebszustände überprüft werden, etwa zur Ermittlung eines allgemeinen Energieverbrauchs über längere Zeiträume. Durch eine flexible Konfiguration der Erfassungsrate kann die Sensorvorrichtung je nach Anforderungen zwischen hoher Datenauflösung und energiesparendem Betrieb optimiert werden, um eine anwendungsoptimierte Datenaufnahme zu gewährleisten.

Gemäß einer weiteren bevorzugten Ausgestaltung weist die Sensorvorrichtung eine Fixiereinrichtung zum Anordnen der Sensorvorrichtung an einer Hutschiene insbesondere eines Schaltschranks auf. Die Fixiereinrichtung kann aus einer genormten Rast- oder Klemmbefestigung bestehen, die es erlaubt, die Sensorvorrichtung ohne zusätzliches Werkzeug auf der Hutschiene zu montieren und bei Bedarf wieder zu entfernen. Die Hutschiene, auch DIN-Schiene genannt, ist insbesondere eine standardisierte Metallprofilschiene, die in Schaltschränken und Verteilerkästen eingesetzt wird, um elektrische und elektronische Komponenten wie Relais, Steuergeräte oder eben Sensorvorrichtungen sicher und platzsparend zu befestigen. Die Hutschiene wird häufig in der Automatisierungstechnik, im Anlagenbau oder in elektrischen Verteilersystemen verwendet. Ein Schaltschrank ist in der Regel ein Gehäuse, das elektrische und elektronische Bauteile, wie Steuerungen, Sicherungen oder Sensorik, aufnimmt und schützt, beispielsweise in Produktionsanlagen, Wasserwerken oder industriellen Pumpensystemen. Durch die Befestigung an der Hutschiene im Schaltschrank kann die Sensorvorrichtung direkt in bestehende Steuerungssysteme auch nachträglich integriert werden, wodurch eine robuste und professionelle Installation gewährleistet wird, beispielsweise zur Überwachung von Kreiselpumpen in einer Wasseraufbereitungsanlage oder in einem industriellen Kühlkreislauf. Insofern erleichtert die Weiterbildung eine kompakte und normgerechte Installation der Sensorvorrichtung in industriellen Umgebungen.

Die Aufgabe der Erfindung wird weiterhin gelöst durch eine Kreiselpumpe umfassend eine Sensorvorrichtung wie zuvor beschrieben, wobei der wenigstens eine Signaleingang mit der Kreiselpumpe verbunden ist. Als Kreiselpumpe wird im Allgemeinen eine Strömungsmaschine bezeichnet, die eine Drehbewegung und dynamische Kräfte zur Förderung überwiegend von Flüssigkeiten als Fluid nutzt. Bei der Kreiselpumpe wird neben einer tangentialen Beschleunigung der Flüssigkeit eine in radialer Strömung auftretende Fliehkraft zur Förderung genutzt, so dass solche Pumpen ebenso als Zentrifugalpumpen bezeichnet werden. Bevorzugt lässt sich die Kreiselpumpe für eine hydraulische Anlage eines Gebäudes oder sonstige Anwendungen verwenden, insbesondere als Schmutz- bzw. Abwasserpumpe.

Im regulären Betrieb der Kreiselpumpe kann ein Gehäuse eines Motors der Kreiselpumpe oberhalb eines Pumpengehäuses angeordnet sein, in welchem das von dem Motor über eine Welle angetriebene Laufrad zum Fördern der Flüssigkeit und die Kreiselkammer vorgesehen ist. Das Gehäuse des Motors kann mit dem Pumpengehäuse ortsfest verbunden und/oder einteilig gestaltet sein. Ebenso kann die Kreiselpumpe und der Motor jeweils eine eigene Welle aufweisen, wobei die Wellen über eine Kupplung miteinander verbindbar sind. Bevorzugt ragt die Welle an einer Antriebsseite aus dem Gehäuse des Motors in das Pumpengehäuse hinein und/oder ist an der Antriebsseite des Laufrads ortsfest mit der Welle verbunden. Entsprechend ist die Ansaugöffnung für das zu fördernde Fluid bevorzugt unten an dem Pumpengehäuse angeordnet. Bevorzugt ist das Gehäuse des Motors und/oder das Pumpengehäuse aus Metall, insbesondere aus Gusseisen oder Edelstahl, Keramik, und/oder Kunststoff gestaltet. Das Fluid bzw. die Flüssigkeit umfasst bevorzugt Wasser oder ein sonstiges flüssiges Medium wie beispielsweise Abwasser. Das Fluid bzw. die Flüssigkeit kann Feststoffe wie beispielsweise Verschmutzungen, Verunreinigungen oder Unrat jeglicher Art, insbesondere Fäkalien, Sedimente, Dreck, Sand, oder auch kleinere Holz-, Gestrüpp-, Textilien- oder Lappenteile oder dergleichen umfassen, die in dem Pumpengehäuse eine Verstopfung bewirken können.

Die Aufgabe der Erfindung wird zudem gelöst durch ein Verfahren zum Überwachen einer Kreiselpumpe mittels einer Sensorvorrichtung, mit den Schritten:
Erfassen wenigstens eines einen Zustand der Kreiselpumpe charakterisierenden Überwachungssignals an wenigstens einem Signaleingang der Sensorvorrichtung wenigstens jede Sekunde, wobei der Signaleingang einen Stromwandlereingang, einen Analogeingang und/oder einen Digitaleingang umfasst;
Analysierendes und/oder datenreduzierendes Vorverarbeiten des wenigstens einen Überwachungssignals insbesondere hinsichtlich eines Alarmzustands der Kreiselpumpe, einer statistischen Auswertung des Zustands der Kreiselpumpe und/oder einer Zustandsüberwachung und -vorhersage der Kreiselpumpe vorzunehmen; und
Periodisches Übertragen nicht öfters als alle 5 Minuten des wenigstens einen vorverarbeiteten Überwachungssignal mittels einer Low Power Wide Area Network, LPWAN,-Funkschnittstelle der Sensorvorrichtung an eine Cloud-Infrastruktur eingerichtet zum Nachverarbeiten des wenigstens einen übertragenen, vorverarbeiteten Überwachungssignal.

Gemäß einer bevorzugten Weiterbildung weist das Verfahren den Schritt auf:
Nachverarbeiten des wenigstens einen übertragenen, vorverarbeiteten Überwachungssignals mittels der Cloud-Infrastruktur.

Durch eine solche Weiterbildung werden weitergehende Analysen, langfristige Datenauswertungen und/oder intelligente Prognosen zur Kreiselpumpenüberwachung ermöglicht. Die Nachverarbeitung kann beispielsweise ein Zusammenführen und Vergleichen von übertragenen, vorverarbeiteten Überwachungssignalen über längere Zeiträume umfassen, um Verschleißtrends oder Anomalien zu erkennen, die auf einen bevorstehenden Ausfall der Kreiselpumpe hindeuten. In einer Wasseraufbereitungsanlage könnte die Cloud beispielsweise aus den übertragenen, vorverarbeiteten Überwachungssignalen ermitteln, dass die Stromaufnahme der Kreiselpumpe langsam ansteigt, was auf zunehmende Lagerreibung hinweist, und frühzeitig eine Wartungsempfehlung generieren. In einer industriellen Kühlanlage kann die Cloud durch einen Abgleich mit historischen Daten erkennen, dass ungewöhnliche Vibrationen auf Kavitation oder eine verstopfte Leitung hindeuten, wodurch gezielte Maßnahmen eingeleitet werden können. Weiterhin kann die Cloud eine automatische Mustererkennung mittels maschinellen Lernens durchführen, um zukünftige Störungen zu prognostizieren und präventive Wartungsstrategien zu optimieren. Ein weiteres Beispiel ist eine Integration in ein übergeordnetes Monitoring-System, das verschiedene Sensorvorrichtungen in einer Produktionsanlage verknüpft, sodass Zusammenhänge zwischen Kreiselpumpenausfällen und anderen Pumpenzuständen erkannt werden können. Durch diese Cloud-basierte Nachverarbeitung wird die Effizienz und Zuverlässigkeit einer Kreiselpumpenüberwachung erheblich verbessert, während gleichzeitig ein lokaler Rechen- und Speicherbedarf der Sensorvorrichtung reduziert wird.

Nach einer anderen bevorzugten Ausgestaltung umfasst das analysierende und/oder datenreduzierende Vorverarbeiten ein Datenkomprimieren und/oder Selektieren des wenigstens einen Überwachungssignals umfasst.

Gemäß einer bevorzugten Weiterbildung umfasst das analysierende und/oder datenreduzierende Vorverarbeiten ein Amplituden- und/oder Zeitreduzieren des wenigstens einen Überwachungssignals.

Weitere Ausgestaltungen und Vorteile des Verfahrens ergeben sich in Analogie zu der zuvor beschriebenen Sensorvorrichtung. Es ist bevorzugt, dass die Reihenfolge von Verfahrensschritten, soweit nicht technisch in einer expliziten Reihenfolge erforderlich, variiert werden kann. Besonders bevorzugt ist vorgenannte Reihenfolge der Verfahrensschritte.

### Kurze Beschreibung der Zeichnungen

Nachfolgend wird die Erfindung unter Bezugnahme auf die anliegenden Zeichnungen anhand bevorzugter Ausführungsbeispiele näher erläutert.

### In den Zeichnungen zeigen

- Fig. 1: eine schematische Ansicht einer Kreiselpumpe zum Ausführen eines vorgeschlagenen Verfahrens gemäß einem bevorzugten Ausführungsbeispiel der Erfindung,
- Fig. 2: zeigt eine schematische Anordnung umfassend die Kreiselpumpe gemäß Fig. 1 und eine Sensorvorrichtung zum Überwachen der Kreiselpumpe gemäß dem bevorzugten Ausführungsbeispiel der Erfindung,
- Fig. 3: ein Ablaufdiagramm zum Ausführen des vorgeschlagenen Verfahrens gemäß dem bevorzugten Ausführungsbeispiel der Erfindung,
- Fig. 4: ein Diagramm zur Erfassung und Auswertung von Überwachungssignalen zur Strommessung an der Kreiselpumpe gemäß dem bevorzugten Ausführungsbeispiel der Erfindung,
- Fig. 5: ein Diagramm einer Trendanalyse zur Überwachung eines Stromverbrauchs der Kreiselpumpe gemäß dem bevorzugten Ausführungsbeispiel der Erfindung,
- Fig. 6: ein Diagramm zur ständigen Überprüfung von Schwellwerten an Signaleingängen der Sensorvorrichtung gemäß dem bevorzugten Ausführungsbeispiel der Erfindung,
- Fig. 7: ein weiteres Diagramm zur ständigen Überprüfung von Schwellwerten an Signaleingängen der Sensorvorrichtung gemäß dem bevorzugten Ausführungsbeispiel der Erfindung, und
- Fig. 8: ein Diagramm zum Verlauf einer Zusatzinformation an eine der Sensorvorrichtung nachgeschaltete Cloud-Infrastruktur gemäß dem bevorzugten Ausführungsbeispiel der Erfindung.

### Detaillierte Beschreibung der Ausführungsbespiele

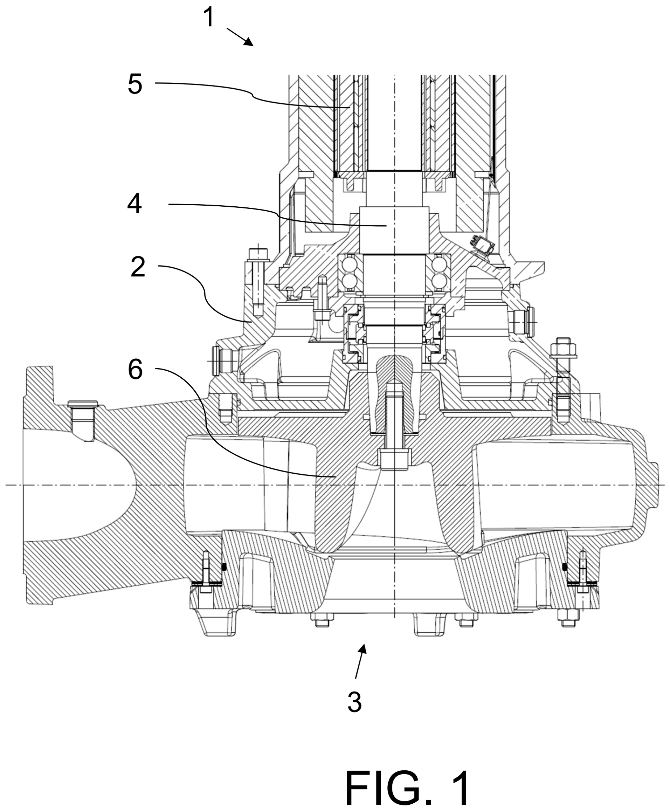

Fig. 1 zeigt eine schematische Ansicht einer Kreiselpumpe 1 zum Ausführen eines nachfolgend beschriebenen Verfahrens zum Überwachen der Kreiselpumpe 1 gemäß einem bevorzugten Ausführungsbeispiel der Erfindung.

Die als Abwasserpumpe gestaltete Kreiselpumpe 1 weist in herkömmlicher Weise ein Pumpengehäuse 2 mit einer in der Figur an dem Pumpengehäuse 2 unten angeordneten Saugöffnung 3 als Einlass auf. In dem Pumpengehäuse 2 ist ein Rotor 4 vorgesehen, der sich in der Zeichnung vertikal erstreckt. Die Rotor 4 ist Teil eines Elektromotors 5, nur ansatzweise dargestellt, der entgegensetzt zu der Saugöffnung 3 angeordnet ist. Der Saugöffnung 3 zugewandt ist ein Laufrad 6 vorgesehen, welches über den Rotor 4 des Elektromotors 5 angetrieben ist. Ferner weist die Kreiselpumpe 1 eine Steuerung auf, in Fig. 1 nicht gezeigt.

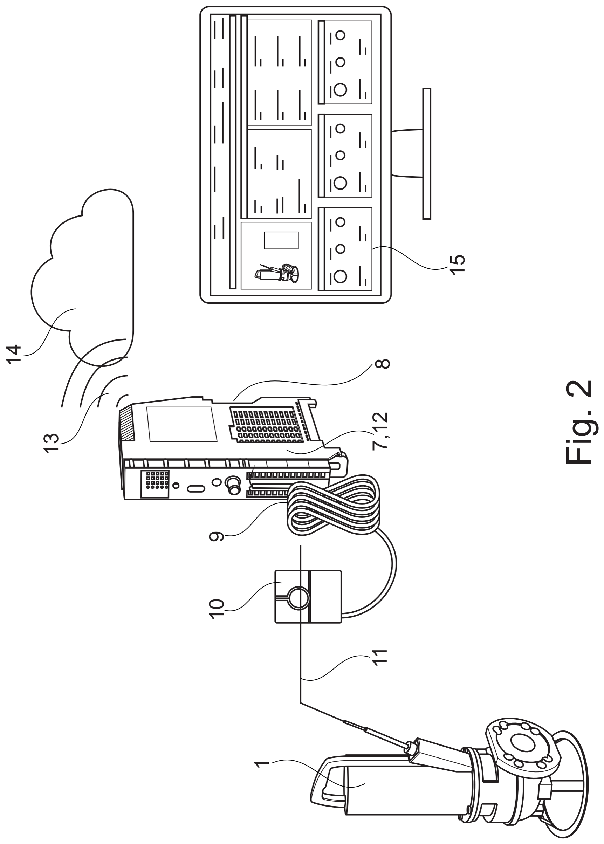

Fig. 2 zeigt eine schematische Anordnung umfassend die Kreiselpumpe 1 gemäß Fig. 1 und eine Sensorvorrichtung 7 zum Überwachen der Kreiselpumpe 1 gemäß dem bevorzugten Ausführungsbeispiel der Erfindung. Die Sensorvorrichtung 7 weist ein gegenüber der Kreiselpumpe 1 eigenes Gehäuse auf, dass mittels einer Fixiereinrichtung 8 an einer Hutschiene eines nicht gezeigten Schaltschranks befestigbar ist. Die Sensorvorrichtung 7 kann batteriebetrieben sein, wird vorliegend jedoch durch den Schaltschrank mit elektrischer Energie versorgt. Die Sensorvorrichtung 7 weist eine Mehrzahl Signaleingänge 9 auf, die mehrere Stromwandlereingänge, einen Analogeingang und einen Digitaleingang umfassen. Zudem ist ein Analogausgang, wenigstens ein Digitalausgang und eine RS485 Schnittstelle sowie eine USB-C Schnittstelle vorgesehen.

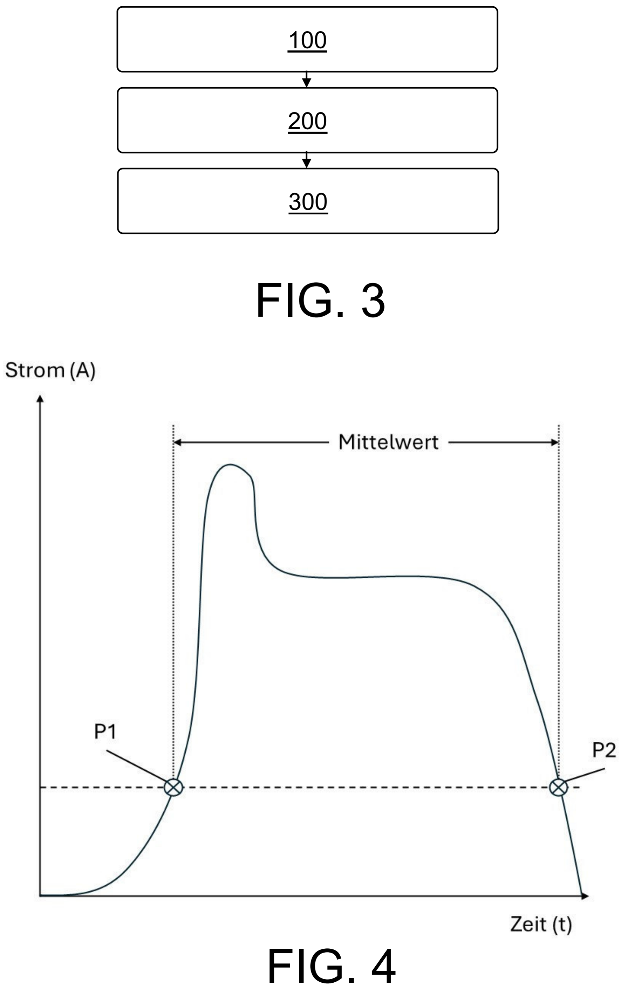

Einer der Stromwandlereingänge ist mit einem Stromwandler 10 verbunden, der an einer Phase eines Netzanschlusskabels 11 der Kreiselpumpe 1 einen in dem Netzanschlusskabel 11 fließenden Strom als ein einen Zustand der Kreiselpumpe 1 charakterisierendes Überwachungssignal erfasst. Die Sensorvorrichtung 7 weist zudem eine als Mikrocontroller gestaltete prozessorbasierte Datenverarbeitungseinrichtung 12, in Fig. 2 nur indirekt sichtbar, sowie eine Low Power Wide Area Network, LPWAN,-Funkschnittstelle 13 auf. Die Datenverarbeitungseinrichtung 12 ist eingerichtet, die in Fig. 3 dargestellten Verfahrensschritte zum Ausführen des vorgeschlagenen Verfahrens gemäß dem bevorzugten Ausführungsbeispiel der Erfindung auszuführen.

In einem ersten Schritt 100 erfolgt das Erfassen des wenigstens einen einen Zustand der Kreiselpumpe 1 charakterisierenden Überwachungssignals an dem wenigstens einem Signaleingang 9 der Sensorvorrichtung 7 wenigstens jede Sekunde durch Datenverarbeitungseinrichtung 12. Das wenigstens eine Überwachungssignal kann wie beschrieben der von dem Elektromotor 5 aufgenommene Strom, eine Drehzahl der der Kreiselpumpe 1 etc. sein. Das Erfassen erfolgt kontinuierlich sowie periodisch und bevorzugt wenigstens alle 500, 250, 100, 50, 25, 5 oder 1 ms.

In einem zweiten Schritt 200 erfolgt mittels der Datenverarbeitungseinrichtung 12 ein analysierendes und datenreduzierendes Vorverarbeiten des wenigstens einen Überwachungssignals hinsichtlich eines Alarmzustands der Kreiselpumpe 1, einer statistischen Auswertung des Zustands der Kreiselpumpe 1 und/oder einer Zustandsüberwachung und -vorhersage der Kreiselpumpe 1. Dazu umfasst das analysierende und datenreduzierende Vorverarbeiten eine Datenkompression und Selektion des wenigstens einen Überwachungssignals.

Ein Alarmzustand der Kreiselpumpe 1 tritt beispielsweise auf, wenn die Sensorvorrichtung 7 mittels der analysierenden Vorverarbeitung kritische Betriebsabweichungen erkennt, die auf eine Fehlfunktion, Überlastung oder drohenden Ausfall der Kreiselpumpe 1 hinweisen. Beispielsweise deutet ein plötzlicher Anstieg der Stromaufnahme auf eine blockierte Rotorwelle 5 oder ein beschädigtes Lager hin, oder ungewöhnliche Vibrationen lassen auf Kavitation oder Unwuchten schließen. Wenn eine Temperatur des Elektromotors 5 über einen festgelegten Grenzwert steigt, kann eine Überhitzung des Elektromotors 5 festgestellt werden, woraufhin ein Alarm ausgelöst und eine Wartungsmeldung generiert werden kann. Der Alarmzustand kann über eine nachgeschaltete Cloud-Infrastruktur 14 an ein übergeordnetes Monitoring-System gesendet werden, um eine sofortige Reaktion zu ermöglichen.

Die statistische Auswertung des Zustands der Kreiselpumpe bezieht sich beispielsweise auf eine langfristige Analyse der erfassten Überwachungssignale, um Mittelwerte, Trends und Abweichungen zu identifizieren. Beispielsweise kann die Sensorvorrichtung 7 die durchschnittliche Stromaufnahme, eine Drehzahl oder die Temperatur über mehrere Wochen hinweg erfassen und analysieren, um untypische Veränderungen im Betrieb frühzeitig zu erkennen. Eine typische Anwendung ist eine Ermittlung einer durchschnittlichen Schwingungsamplitude über mehrere Betriebszyklen, um allmähliche Veränderungen durch mechanischen Verschleiß festzustellen. Ebenso kann eine Trendanalyse eines Energieverbrauchs dabei helfen, Ineffizienzen zu erkennen, beispielsweise durch Ablagerungen in Rohrleitungen, die die Kreiselpumpe 1 stärker belasten. Die statistische Auswertung kann als Grundlage für optimierte Wartungsstrategien dienen und helfen, ungeplante Stillstände zu vermeiden.

Die Zustandsüberwachung erfolgt beispielsweise durch eine kontinuierliche Analyse der Überwachungssignale der Kreiselpumpe 1, um sicherzustellen, dass die Überwachungssignale innerhalb normaler Betriebsbereiche arbeitet. Verschiedene Messwerte wie Stromaufnahme, Drehzahl, Temperatur oder Vibrationen können in Echtzeit überwacht und mit historischen Daten verglichen. Zustandsvorhersage, Predictive Maintenance, erlaubt weitgehend dazu beispielsweise mithilfe von maschinellen Lernverfahren oder vordefinierten Modellen anhand der erfassten Überwachungssignals zukünftige Fehler oder Wartungsbedarfe zu prognostizieren. Beispielsweise kann anhand einer zunehmenden Stromaufnahme bei gleichbleibender Last vorhergesagt werden, dass die Kreiselpumpe 1 in wenigen Wochen gewartet werden muss, da sich eine Lagerschädigung abzeichnet. Ebenso kann eine regelmäßige Analyse von Frequenzspektren der Vibrationen frühzeitig auf eine sich entwickelnde Unwucht hinweisen, bevor diese zu einem kritischen Schaden führt. Die Kombination aus Zustandsüberwachung und Vorhersage ermöglicht eine effiziente Wartungsplanung, reduziert ungeplante Ausfälle und verlängert die Lebensdauer der Kreiselpumpe 1.

In einem dritten Schritt 300 erfolgt ein periodisches Übertragen nicht öfters als alle 5 Minuten des wenigstens einen vorverarbeiteten Überwachungssignals mittels der Low Power Wide Area Network, LPWAN,-Funkschnittstelle 13 der Sensorvorrichtung 7 an die Cloud-Infrastruktur 14, welche zum Nachverarbeiten des wenigstens einen übertragenen, vorverarbeiteten Überwachungssignal eingerichtet ist. Das Übertragen erfolgt kontinuierlich und periodisch sowie nicht öfter als alle 10, 15, 20, 30 oder 60 Minuten.

Die LPWAN,-Funkschnittstelle 13 ist dazu eingerichtet, das wenigstens eine vorverarbeitete Überwachungssignal mittels eines Long Range Wide Area Network, LoRaWAN,-Netzprotokolls, eines Long Term Evolution for Machines, LTE-M,- Netzprotokolls und/oder mittels eines NarrowBand IoT-Netzprotokolls zu übertragen. Aufgrund der zuvor erfolgten Vorverarbeitung ist eine Datenübertragungsrate des wenigstens einen Überwachungssignals ≥ 300, 500, 1000 oder 2000 größer als des wenigstens einen übertragenen, vorverarbeiteten Überwachungssignals.

Das Übertragen nicht häufiger als alle 5 Minuten als Sendeintervall meint beispielsweise, dass in der Sensorvorrichtung 7 selbst eine Daten-Aggregation umgesetzt wird. Wenn ein Zustandswechsel beispielsweise Kreiselpumpe 1 Ein/Aus mehrfach in dem 5 Minuten Sendeintervall detektiert wird, werden die Zustandswechsel zum einen gezählt und zum anderen bis zu einer gewissen Anzahl mit jeweils eigenem Zeitstempel, beispielsweise maximal 15 Zustandsänderungen in 5 Minuten, aggregiert in einer Nachricht Sensorvorrichtung 7 an die Cloud-Infrastruktur 14 übertragen, so dass die Information zwar nicht live verfügbar ist, aber keine Information verloren geht, die kürzer als das Sendeintervall ist.

Schließlich kann ein Nachverarbeiten des wenigstens einen übertragenen, vorverarbeiteten Überwachungssignals mittels der Cloud-Infrastruktur 14 erfolgen, beispielsweise an einem Leitstand 15. Die Nachverarbeitung kann beispielsweise ein Zusammenführen und Vergleichen von übertragenen, vorverarbeiteten Überwachungssignale über längere Zeiträume umfassen, um Verschleißtrends oder Anomalien zu erkennen, die auf einen bevorstehenden Ausfall der Kreiselpumpe 1 hindeuten.

Denkbar ist zudem, dass das Vorverarbeiten von der Cloud-Infrastruktur 14 aus konfiguriert werden kann, um beispielsweise Schwellenwerte für Veränderungen bzw. Events pro Kreiselpumpe 1 einzeln anzupassen. Zudem könnten weitere Verarbeitungsalgorithmen, beispielsweise Filter-Algorithmen, von der Cloud-Infrastruktur 14 in Sensorvorrichtung 7 bzw. die Datenverarbeitungseinrichtung 12 herunterladbar und gezielt auf einzelne Überwachungssignal anwendbar sein.

Fig. 4 zeigt ein Diagramm zur Erfassung und Auswertung von Überwachungssignalen zur Strommessung an der Kreiselpumpe 1 gemäß dem bevorzugten Ausführungsbeispiel der Erfindung. Die Überwachungssignale liegen in Form von Strom an den Signaleingängen 12 an, um Betriebszustände der Kreiselpumpe 1 erfassen. Die Datenverarbeitungseinrichtung 12 liefert mittels der analysierenden Vorverarbeitung Informationen, wenn der gemessene Strom einen konfigurierten Schwellwert überschreitet, Markierung P1 in Fig. 4, oder unterschreitet, Markierung P2 in Fig. 4, jeweils mit Zeitstempel. Der Mittelwert des Stroms zwischen P1 und P2 sowie während eines laufenden Betriebs bis zum nächsten Update wird angezeigt. Die erfassten Überwachungssignale können in der Sensorvorrichtung 7 persistent gespeichert werden, um Stromausfälle zu überstehen. In einer anderen Variante werden auch Standardabweichung für eine EIN-Phase der Kreiselpumpe 1 sowie Höhe und Dauer eines Einschaltimpulses erfasst und ausgewertet

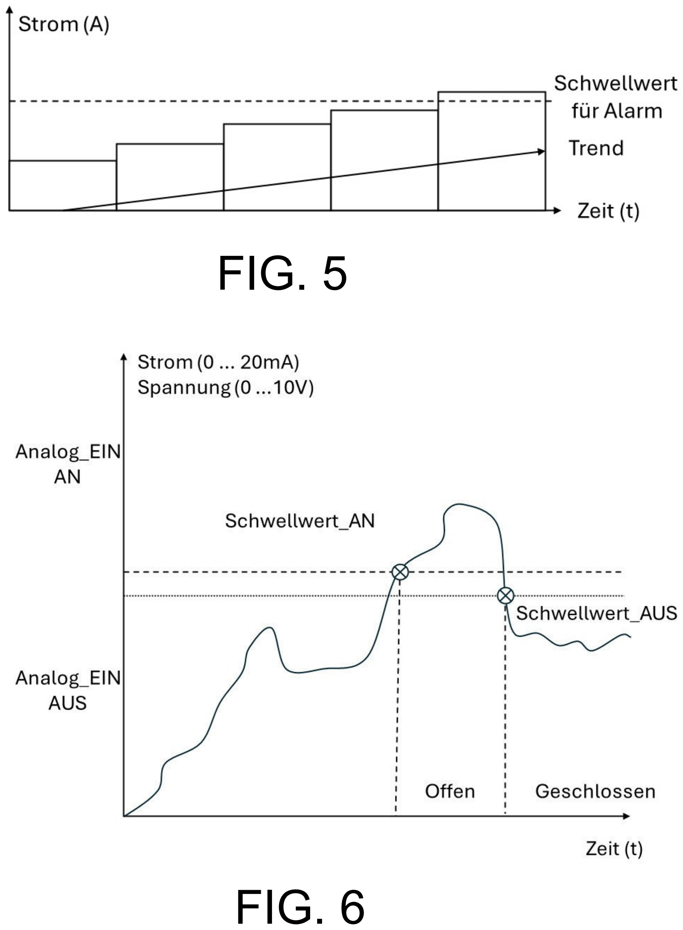

Fig. 5 zeigt ein Diagramm einer Trendanalyse zur Überwachung eines Stromverbrauchs der Kreiselpumpe 1 gemäß dem bevorzugten Ausführungsbeispiel der Erfindung. Die Analyse ermöglicht es, frühzeitig auf mögliche Probleme der Kreiselpumpe 1 zu schließen. Die Sensorvorrichtung 7 bzw. die Datenverarbeitungseinrichtung 12 stellt einen Zähler für eine Anzahl von Einschaltereignissen der Kreiselpumpe 1 in den letzten 24 Stunden bereit, einschließlich eines möglichen laufenden Zyklus zum Zeitpunkt einer Auswertung. Der Zähler wird bei jedem Update-Zyklus aktualisiert und persistent gespeichert, um einen Stromausfall zu überstehen. Alternativ kann auf einem von der Cloud-Infrastruktur 14 bereitgestellten Dashboard ein Alarm basierend auf einem einfachen Schwellwertvergleich für einen Mittelwert, beispielsweise 1,5-facher Nennstrom, generiert werden. In einem späteren Schritt kann eine zusätzliche Komponente der Cloud-Infrastruktur 14 eine Trendanalyse der gemeldeten Mittelwerte durchführen, um Probleme vorherzusagen, bevor ein absoluter Schwellwert überschritten wird.

Fig. 6 zeigt ein Diagramm zur ständigen Überprüfung von Schwellwerten an Signaleingängen der Sensorvorrichtung 7 auf einstellbare Schwellwerte für eine AN/AUS Erkennung gemäß dem bevorzugten Ausführungsbeispiel der Erfindung. Liegt das gemessene Überwachungssignal über einem EIN-Schwellwert wird ein EIN-Event mit Zeitstempel an die Cloud-Infrastruktur 14 gesendet. Fällt danach das gemessene Überwachungssignal unter eine AUS-Schwellwert wird ein AUS-Event mit Zeitstempel an die Cloud-Infrastruktur 14 gesendet. Zusätzlich wir eine Zeit übermittelt, die der Signaleingang 9 über dem Schwellwert lag, sogenannte AN-Zeit, und diese wird in zwei Ausführungen in die Cloud-Infrastruktur 14 gesendet. Solange der Analogeingang über dem AN-Schwellwert liegt, wird alle 15 Minuten die Zeit seit Überschreiten des Schwellwertes gesendet. Wenn der Analogeingang unter den AUS-Schwellwert fällt, wird die Zeit zwischen dem AN- und dem AUS-Schwellwert gesendet.

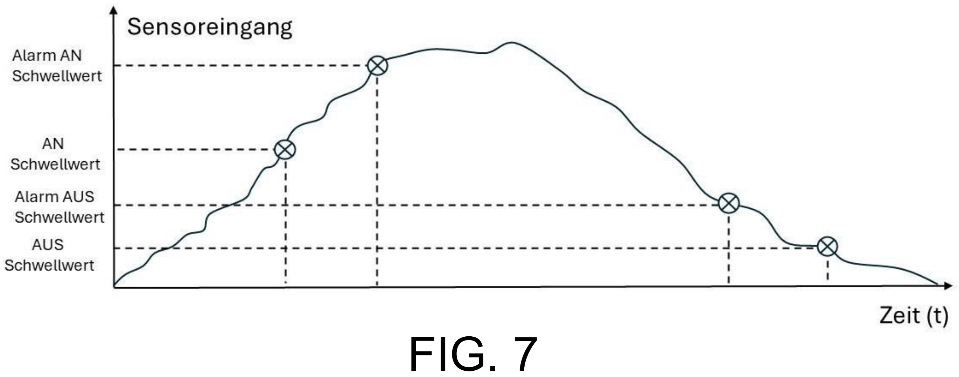

Fig. 7 zeigt ein weiteres Diagramm zur ständigen Überprüfung von Schwellwerten an den Signaleingängen 9 der Sensorvorrichtung 7 auf einstellbare Schwellwerte für die AN/AUS Erkennung gemäß dem bevorzugten Ausführungsbeispiel der Erfindung, wobei Alarm-Schwellen konfiguriert werden können, so dass bei Überschreiten des Alarm-Schwellwertes eine Alarm-Meldung mit Zeitstempel in die Cloud-Infrastruktur 14 gesendet wird. Bei Unterschreiten des Alarm Schwellwertes wird eine entsprechende Information mit Zeitstempel an die Cloud-Infrastruktur 14 gesendet, dass ein Alarm nicht mehr aktiv ist.

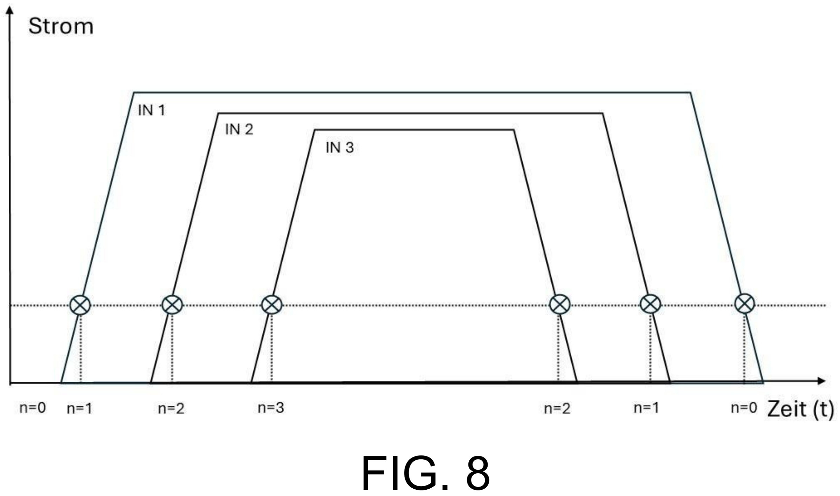

Fig. 8 zeigt ein Diagramm zum Verlauf einer Zusatzinformation an eine der Sensorvorrichtung 7 nachgeschaltete Cloud-Infrastruktur 14 gemäß dem bevorzugten Ausführungsbeispiel der Erfindung, um zu erkennen, wie viele Kreiselpumpen 1 gleichzeitig laufen. Wenn eine Kreiselpumpe 1 den Schwellwert für die ON-Erkennung überschreitet, wir ein Zähler um eins erhöht und mit Zeitstempel an die Cloud-Infrastruktur 14 gesendet. Wenn ein Schwellwert unter den Schwellwert für die ON-Erkennung fällt, wir der Zähler um 1 verringert und mit Zeitstempel and die Cloud-Infrastruktur 14 gesendet.

Die beschriebenen Ausführungsbeispiels sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| Kreiselpumpe | 1 |
| Pumpengehäuse | 2 |
| Saugöffnung | 3 |
| Rotor | 4 |
| Elektromotor | 5 |
| Laufrad | 6 |
| Sensorvorrichtung | 7 |
| Fixiereinrichtung | 8 |
| Signaleingang | 9 |
| Stromwandler | 10 |
| Netzanschlusskabel | 11 |
| Datenverarbeitungseinrichtung | 12 |
| LPWAN,-Funkschnittstelle | 13 |
| Cloud-Infrastruktur | 14 |
| Erfassen wenigstens eines einen Zustand der Kreiselpumpe 1 charakterisierenden Überwachungssignals an wenigstens einem Signaleingang 9 der Sensorvorrichtung 7 wenigstens jede Sekunde | 100 |
| Analysierendes und datenreduzierendes Vorverarbeiten des wenigstens einen Überwachungssignals hinsichtlich eines Alarmzustands der Kreiselpumpe 1, einer statistischen Auswertung des Zustands der Kreiselpumpe 1 und/oder einer Zustandsüberwachung und -vorhersage der Kreiselpumpe 1 vorzunehmen | 200 |
| Periodisches Übertragen nicht öfters als alle 5 Minuten des wenigstens einen vorverarbeiteten Überwachungssignal mittels einer Low Power Wide Area Network, LPWAN,-Funkschnittstelle 13 der Sensorvorrichtung 7 an eine Cloud-Infrastruktur 14 eingerichtet zum Nachverarbeiten des wenigstens einen übertragenen, vorverarbeiteten Überwachungssignal | 300 |

## Patentansprüche

**1.** Sensorvorrichtung (7) zum Überwachen einer Kreiselpumpe (1), mit
einem gegenüber der Kreiselpumpe (1) eigenem Gehäuse, wenigstens einem Signaleingang (9) umfassend einen Stromwandlereingang, einen Analogeingang und/oder einen Digitaleingang, einer Low Power Wide Area Network, LPWAN,-Funkschnittstelle (13) und einer prozessorbasierten Datenverarbeitungseinrichtung (12), wobei
die Datenverarbeitungseinrichtung (12) eingerichtet ist,
wenigstens jede Sekunde mittels des wenigstens einen Signaleingangs (8) wenigstens ein einen Zustand der Kreiselpumpe (1) charakterisierendes Überwachungssignal zu erfassen,
eine analysierende und datenreduzierende Vorverarbeitung des wenigstens einen Überwachungssignals hinsichtlich eines Alarmzustands der Kreiselpumpe (1), einer statistischen Auswertung des Zustands der Kreiselpumpe (1) und/oder einer Zustandsüberwachung und -vorhersage der Kreiselpumpe (1) vorzunehmen, und
das wenigstens eine vorverarbeitete Überwachungssignal nicht öfters als alle 5 Minuten mittels der LPWAN-Funkschnittstelle (13) an eine Cloud-Infrastruktur (14) eingerichtet zum Nachverarbeiten des wenigstens einen übertragenen, vorverarbeiteten Überwachungssignal zu übertragen.

**2.** Sensorvorrichtung (7) nach dem vorhergehenden Anspruch, wobei die Sensorvorrichtung (7) zwei oder drei Stromwandlereingänge, wenigstens einen Analogausgang, wenigstens einen Digitalausgang und/oder eine RS485 Schnittstelle umfasst.

**3.** Sensoreinrichtung nach einem der vorhergehenden Ansprüche, wobei die analysierende und datenreduzierende Vorverarbeitung eine Datenkompression und/oder Selektion des wenigstens einen Überwachungssignals umfasst.

**4.** Sensoreinrichtung nach einem der vorhergehenden Ansprüche, wobei die analysierende und datenreduzierende Vorverarbeitung eine Amplituden- und/oder Zeitreduzierung des wenigstens einen Überwachungssignals umfasst.

**5.** Sensoreinrichtung nach einem der vorhergehenden Ansprüche, wobei eine Datenübertragungsrate das wenigstens einen Überwachungssignals ≥ 300, 500, 1000 oder 2000 größer als des wenigstens einen übertragenen, vorverarbeiteten Überwachungssignals ist.

**6.** Sensoreinrichtung nach einem der vorhergehenden Ansprüche, wobei das wenigstens eine übertragene, vorverarbeitete Überwachungssignal vom Datentyp Boolean ist.

**7.** Sensoreinrichtung nach einem der vorhergehenden Ansprüche, wobei die LPWAN,-Funkschnittstelle (13) eingerichtet ist, das wenigstens eine vorverarbeitete Überwachungssignal mittels eines Long Range Wide Area Network, LoRaWAN,-Netzprotokolls, eines Long Term Evolution for Machines, LTE-M,- Netzprotokolls und/oder mittels eines NarrowBand IoT-Netzprotokolls zu übertragen.

**8.** Sensoreinrichtung nach einem der vorhergehenden Ansprüche, wobei das Übertragen kontinuierlich und/oder periodisch und/oder nicht öfters als alle 10, 15, 20, 30 oder 60 Minuten erfolgt.

**9.** Sensoreinrichtung nach einem der vorhergehenden Ansprüche, wobei das Erfassen kontinuierlich und/oder periodisch und/oder wenigstens alle 500, 250, 100, 50, 25, 5 oder 1 ms erfolgt.

**10.** Sensorvorrichtung (7) nach einem der vorhergehenden Ansprüche, mit einer Fixiereinrichtung (8) zum Anordnen der Sensorvorrichtung (7) an einer Hutschiene insbesondere eines Schaltschranks.

**11.** Kreiselpumpe (1) umfassend eine Sensorvorrichtung (7) nach einem der vorhergehenden Ansprüche, wobei der wenigstens eine Signaleingang (9) mit der Kreiselpumpe (1) verbunden ist.

**8.** Verfahren zum Überwachen einer Kreiselpumpe (1) mittels einer Sensorvorrichtung (7) mit einem gegenüber der Kreiselpumpe (1) eigenem Gehäuse, mit den Schritten:
Erfassen wenigstens eines einen Zustand der Kreiselpumpe (1) charakterisierenden Überwachungssignals an wenigstens einem Signaleingang (9) der Sensorvorrichtung (7) wenigstens jede Sekunde (100), wobei der Signaleingang (9) einen Stromwandlereingang, einen Analogeingang und/oder einen Digitaleingang umfasst;
Analysierendes und datenreduzierendes Vorverarbeiten des wenigstens einen Überwachungssignals hinsichtlich eines Alarmzustands der Kreiselpumpe (1), einer statistischen Auswertung des Zustands der Kreiselpumpe (1) und/oder einer Zustandsüberwachung und -vorhersage der Kreiselpumpe (1) vorzunehmen (200); und
Periodisches Übertragen nicht öfters als alle 5 Minuten des wenigstens einen vorverarbeiteten Überwachungssignals mittels einer Low Power Wide Area Network, LPWAN,-Funkschnittstelle (13) der Sensorvorrichtung (7) an eine Cloud-Infrastruktur (14) eingerichtet zum Nachverarbeiten des wenigstens einen übertragenen, vorverarbeiteten Überwachungssignal (300).

**13.** Verfahren nach dem vorhergehenden Verfahrensanspruch, mit dem Schritt:
Nachverarbeiten des wenigstens einen übertragenen, vorverarbeiteten Überwachungssignals mittels der Cloud-Infrastruktur (14).

**14.** Verfahren nach einem der vorhergehenden Verfahrensansprüche, wobei das analysierende und datenreduzierende Vorverarbeiten ein Datenkomprimieren und/oder Selektieren des wenigstens einen Überwachungssignals umfasst.

**15.** Verfahren nach einem der vorhergehenden Verfahrensansprüche, wobei das analysierende und datenreduzierende Vorverarbeiten ein Amplituden- und/oder Zeitreduzieren des wenigstens einen Überwachungssignals umfasst.
